# EUROPEAN PATENT APPLICATION

(11) **EP 2 755 175 A1**
(43) Date of publication of application: **16.07.2014**
(21) Application number: 14151177.4
(22) Date of filing: 14.01.2014
(51) Int. Cl.: G06Q 10/08

(54) **Method and system for delivering an item**

(30) Priority: 15.01.2013 NL 2010126; 15.01.2013 US 201361752524 P
(71) Applicant: Pilar B.V., 2012 ES Haarlem (NL)
(72) Inventor: Lichtenveldt, Michel Banier, 2061 LP Bloemendaal (NL)
(74) Representative: EP&C

(57) **Abstract**

A method of delivery of an item, comprises
- receiving by a delivery profile database server, DPDS, delivery profile input data from a user;
- generating delivery profile data, DPD, and a delivery profile user identity, DPUI, associated with the delivery profile data, in response the received delivery profile input data;
- sending by the DPDS an authorization request to the user to request the user to authorize a sender to obtain access to at least part of the delivery profile data;

in response to receiving by the DPDS an authorization response:
- sending by the DPDS the at least part of the DPD to the sender,
- providing by the sender an affixing of a delivery address data to the item based on the at least part of the DPD received from the DPDs; and
- delivering the item in accordance with the affixed delivery address data.

## Description

The invention relates to a method and system for delivering an item.

In the last years, consumers increasingly purchase goods via the internet, whereby ordering and payment is performed online, while delivery of the item is for example taken care of by a parcel or postal service (generally referred to as logistic services). Thereby, the user makes himself known to for example an online store where the item is purchased, e.g. by entering data in a client profile. The client profile for example comprises name data, invoice address data, delivery address data, payment data such as preferred payment method, and/or other data such as user setting that may be used for mailing/marketing purposes, such as age, preferences, etc. Given this trend of online ordering, an increasing amount of goods are presently delivered via parcel or postal services. Generally, consumers request delivery of the item to their home address or to a service address where they can collect the ordered item, such as a service point or a post office. Generally, a user is able to trace online a status of the delivery, for example by means of a track and trace code. Nevertheless, the steadily increasing use of online ordering causes a mayor problem at postal delivery services/mail delivery services as a result of a package being undeliverable.

For logistic services to be competitive, a low delivery rate needs to be charged, which requires - in order to make the delivery service commercially feasible - an efficient handling and efficient delivery of the item. Being unable to deliver an item appears to be a major factor in this respect. Being unable to deliver the item results in a need to deliver the item again at another moment in time. In the event of an incorrect address, or when delivery cannot be performed for any other reason (e.g. outdated address, no person available to receive the item, address incorrect, etc.), the item is stored for some time in order to try to retrieve correct delivery information, or sent back to their origin. All in all, these efforts have a substantial effect on total averaged delivery cost per item. Also, the multiple delivery efforts may increase delivery time and require additional distance to be driven by a logistics service, hence increase energy consumption. As a result, a major problem for logistic services is the cost for multiple delivery attempts or storage or returning of an undeliverable parcel.

The invention aims to make a delivery of an item more efficient. In order to achieve this goal, the method according to a first aspect of the invention comprises:
- receiving by a delivery profile database server, DPDS, delivery profile input data from a user device;
- generating delivery profile data, DPD, and a delivery profile user identity, DPUI, associated with the delivery profile data, in response the received delivery profile input data;
- sending by the DPDS an authorization request to the user device to request the user to authorize a sender to obtain access to at least part of the delivery profile data;
   in response to receiving by the DPDS an authorization response:
- sending by the DPDS the at least part of the DPD to the sender,
- providing by the sender an affixing of a delivery address data to the item based on the at least part of the DPD received from the DPDS; and
- delivering the item in accordance with the affixed delivery address data.

Thus, a user who intends to take advantage of the delivery in accordance with the invention creates a delivery profile. Thereto, the user for example performs an online registration via the internet thereby creating a delivery profile and a delivery profile user identity associated therewith. The delivery profile may comprise delivery information, including one or more delivery addresses. When the user has entered a profile and when an item is to be delivered to the user, the sender that intends to send the item requests access to the delivery profile. The delivery profile database server will send to the user an authorisation request, to request the user if the particular sender may be provided with delivery information from the delivery profile database. In case authorisation is confirmed by an authorisation response from the user device (the authorization may be preauthorised or an authorisation may be required at the time when the delivery address data is required for delivery), delivery profile information will be provided to the sender. A delivery address data is derived from the delivery profile data (either by the delivery profile database or by the sender), and the item is provided with the delivery address data, e.g. by printing the delivery address data, by printing an optically readable code, such as a bar code or QR code on the item, NFC-chip etc. Then, the item is delivered in accordance with the delivery address data provided on the item. As a result, as the user only has to enter the delivery profile once, while a plurality of senders may make us of the data thus entered, thus providing that high quality up to date address information is provided on the item, so that a risk of delivering the item to an incorrect address (such as an old address) may be reduced. Furthermore, as multiple third parties may obtain access to the delivery address profile data, the user is only required to keep up to date a single profile, instead of having to update delivery address data per sender. Still further, the delivery address data may be fetched from the delivery profile database server before the item enters a logistics chain. The user device via which the user may communicate with the DPDS may comprise any data processing device having a user interface (comprising e.g. a display device and a data entry device), such as an internet enables telephone, a smartphone, a computer, a notebook, a tablet computer, etc.

The item may for example comprise a parcel, a letter, printed matter or any other physical object. The term item (or goods) may refer to a single item as well as to plural items. The term delivery address may comprise any type of delivery address data, such as an address, a post office box, a post office, a service point, a geographical coordinate, delivery fallback information etc. The delivery address data may be affixed by printing the address data, affixing a label comprising the address data, etc.

In an embodiment, in response to receiving the authorization response from the user, the DPDS sends an authorization key to the sender, the sending of the at least part of the DPD by the DPDS to the sender being performed in response to receiving, by the DPDS, of the authorization key. Thereby, the sender that intends to send an item to the user, receives an authorization key (such as a code or encrypted code) that enables the sender to request delivery data at the moment it is required. The authorization key may be valid once, for a predetermined number of requests for delivery data, or for a predetermined time period. The user may, via the user device, revoke the authorization, so that the user stays in control in authorizing and revoking access to his DPD. Such validity information may be comprised (e.g. encoded) in the code, or may be maintained by the DPDS in relation to each authorization code as provided.

The authorization key may comprise the DPUI. In an embodiment, the authorization key may be formed by the DPUI (e.g. in encrypted or un-encrypted form)..

In an embodiment, the sender is associated with an online shopping server, the sending by the DPDS of the authorization request being initiated by the online shopping server in response to the user entering an order for an item at the online shopping server. Requesting delivery address data from the delivery profile database server may be integrated into an online ordering process. In case that the user has registered at the online shopping server, the delivery address data may be requested from the delivery profile database server (user permission may either be requested by the online shopping server or be given beforehand and stored in the delivery profile database server as an association). Conveniently, the online shopping server may associate an online shopping server user identity to the delivery profile database user identity or the authorization key. The association may for example be performed by depicting to the user, in the online ordering process at the online shopping server, an icon or other link to the delivery profile, allowing the user, when selecting the link, to either register him/herself at the delivery profile database server thus entering a delivery profile, or - when the user has already registered himself - to link his/her delivery database user identity to the user identity at the online shopping server and to provide a permission to the delivery profile data server to provide at least part of the delivery profile data to the online shopping server

The delivery profile data may comprise at least one delivery address and time information associated with the or each delivery address, so that a time at which the delivery is to take place may be matched with the times as may have been provided by the user. The user may for example identify in the profile at which dates and/or which time of the day the delivery may take place, or which addresses apply when. As a result, a risk of the item being undeliverable because of the item being offered for delivery at an inconvenient time when the person that is to receive the item is not available or available at another address, may be reduced. The time information may comprise at least one of a weekday and a time of the day time period. For example, when a sender requests for delivery profile data (e.g. in response to a user ordering an item at an online shop or because the sender intends to send a letter to the user), the DPDS provides delivery addresses and corresponding time information about when the delivery addresses apply, which allows the sender to schedule delivery and choose a most appropriate delivery time and/or address.

The delivery profile data may furthermore comprise at least one of logistic delivery channel settings, addressed commercial mail delivery settings, unaddressed commercial mail delivery settings, newspaper delivery settings, free newspaper delivery settings and vacation delivery settings. By the logistics delivery channel settings, the user may indicate which delivery services he/she prefers and/or provide other preferences for the logistics and printing industry (such as preferred type of box, "green" delivery having a low environmental impact, express delivery, economic delivery, etc.). By the unaddressed commercial mail delivery settings, newspaper delivery settings and free newspaper delivery settings, the user may set preferences related to receiving unaddressed commercial mail, newspapers, and free newspapers. By the vacation delivery setting, the user may enter settings to provide that items are stored or not sent to the user as long as the user is on vacation. The delivery profile database server may comprise association data to associate the delivery profile data associated with the delivery profile user identity with at least one sender from a group of third parties, the method comprising:
comparing by the delivery profile database server if the sender from which the delivery address data request message has been received, is associated with at least one of the delivery profile data and the delivery profile user identity, and
only sending the delivery address data to the sender if the sender is associated with at least one of the delivery profile data and the delivery profile user identity.
By associating the delivery profile data and/or the user identity with a sender, the user may control which senders he/she allows to receive data from the delivery profile. Thereby, the user may authorize the sender/parties which are associated to receive the data without requiring the user to respond to a request for permission. Firms or institutions, e.g. banks, insurances, governmental authorities, or other parties that send large amount of mail, etc. may for example make use of this possibility, and thereby provide that the mail sent to the user is provided with delivery address data is accordance with the delivery profile, without the burden of having to ask the user and wait for permission from the user to access the delivery profile data each time.

The at least part of the delivery profile data that is sent to the sender may comprise a postal mail address as valid according to the delivery profile data at a planned time of delivery, so as to respect a users privacy and prevent to provide more data to the sender than absolutely necessary. Alternatively, multiple delivery addresses and associated times when the delivery addresses apply, may be provided.
In an embodiment, the generating of the DPD comprises :
- requesting the user to enter an e-mail address, a postal mail address and a telephone number;
- sending a respective activation code to the postal mail address and a respective activation code to the e-mail address as entered by the user;
- prompting the user to return the activation codes, whereby at least one of the activation codes is to be returned via the telephone number;
- comparing the returned activation codes with the sent activation codes;
- comparing the telephone number from which the respective activation code has been returned with the telephone number as entered by the user; and
- activating a user delivery profile in response to a matching of the returned activation codes with the sent activation codes and a matching of the telephone number from which the respective activation code has been returned with the telephone number as entered by the user. The delivery profile data as entered by the user may hence be validated to a certain extent by sending by mail a code to the delivery address or main delivery address as entered by the user, and by involving the telephone number as provided by the user in the activation process (either by sending a code to the telephone by means of for example SMS, or requesting the user to return a sent code by means of sending an SMS from his/her telephone) In order to validate e-mail address, telephone number and delivery address (i.e. validate 3 entries) 2 codes will be sent to the user, for example either to the delivery address and the e-mail address or to the delivery address and telephone number, while requesting the user to return both codes. For example, when the codes have been sent to the delivery address and the e-mail address, the user is prompted to return one of the codes from his telephone (e.g. by means of sending a text message) and one of the codes via a web browser or e-mail.

Further validation may include a validation of a bank account number, which may for example be performed by booking a (e.g. symbolic, low) amount onto the account number or withdrawing an (e.g. symbolic, low) amount therefrom, while a validation code is provided to the holder of the account in a specification of such financial transaction (which reference is hence accessible to the user via online banking or on a paper transaction overview). The user may be prompted to return such validation code via the user device, and the DPDS may verify if the code provided by means of the financial transaction equals the code returned by the user, in which case the account number is considered validated.

In case the user device is provided with a position measurement sensor, such as a Global Positioning System (GPS) position sensor, an alternative for address validation may be provided as follows: instead of sending by post a card or letter to the postal mail address as provided by the user, the DPDS may also prompt the user to go to the geographical location of the user device, and confirm the location on the user device: position data as measured by a position sensor of the user device may then be sent from the user device to the DPDS. The DPDS may then translate the measured position into a corresponding address (using map data), and this address with the address as entered by the used. If corresponding, the postal mail delivery address may be validated,

According to a second aspect of the invention, there is provided a method of delivery of an item, comprising:
- receiving by a delivery profile database server, DPDS, delivery profile input data from a user device;
- generating delivery profile data, DPD, and a delivery profile user identity, DPUI, associated with the delivery profile data, in response the received delivery profile input data;
- sending by the DPDS an authorization request to the user device to request the user to authorize a sender to obtain access to at least part of the delivery profile data;
   in response to receiving by the DPDS an authorization response:
- sending by the DPDS the at least part of the DPD to the sender, thereby enabling the sender to affix a delivery address data to the item based on the at least part of the DPD received from the DPDs; and to deliver the item in accordance with the affixed delivery address data. The same or similar effect as described in respect of the above method according to the first aspect of the invention, may be achieved. The same or similar embodiments as described in respect of the method according to the first aspect of the invention may be provided, which may achieve the same or similar effects as described.

According to a third aspect of the invention, there is provided a method of delivery of an item, comprising:
- sending from a user device delivery profile input data to a delivery profile database server, DPDS, to enable the DPDS to generating delivery profile data, DPD, and a delivery profile user identity, DPUI, associated with the delivery profile data, in response the received delivery profile input data;
- receiving by the user device from the DPDS an authorization request to request the user to authorize a sender to obtain access to at least part of the delivery profile data;
- sending from the user device to the DPDS an authorization response in order to enable the DPDS to send the at least part of the DPD to the sender to enable the sender to affix a delivery address data to the item based on the at least part of the DPD received from the DPDS; and to deliver the item in accordance with the affixed delivery address data.

According to a fourth aspect of the invention, there is provided a software program comprising program instructions to, when loaded into a memory of a data processing device, provide the data processing device to perform the method according to the invention.

According to fifth aspect of the invention, there is provided delivery profile database server configured to perform the method according to the inventions. The same or similar effect as described in respect of the method according to the first aspect of the invention, may be achieved by the methods in accordance with the second and third aspects of the invention, the software program product according to the fourth aspect of the invention and the delivery profile database server according to the fifth aspect of the invention. Likewise, the same or similar embodiments as described in respect of the method according to the first aspect of the invention may be provided, which may achieve the same or similar effects as described.

Further embodiments, features and advantages of the invention will become clear from the appended drawing and corresponding description, wherein non-limiting embodiments of the invention are disclosed, wherein:
Figure 1 depicts a block schematic diagram of a delivery profile database server, user device and sender, based on which an embodiment of the invention will be illustrated;
Figure 2 depicts a flow diagram to illustrate a method according to an embodiment of the invention;
Figure 3 depicts a flow diagram to illustrate a method according to an embodiment of the invention; and
Figure 4A and 4B in conjunction depict a flow diagram to illustrate a method according to an embodiment of the invention.

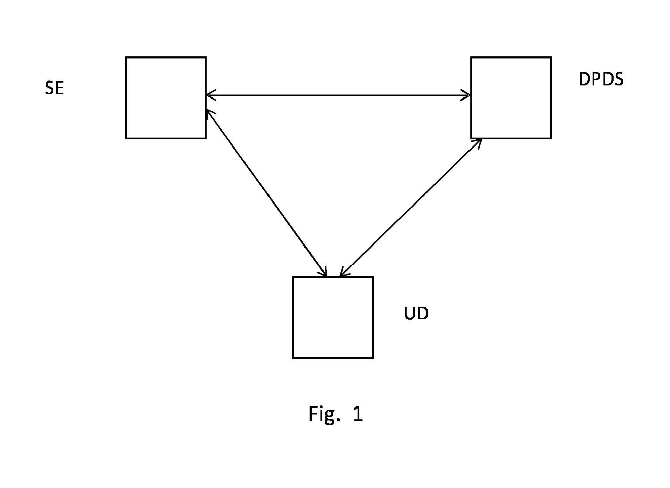

Figure 1 depicts a delivery profile database server DPDS and a user device UD. The delivery profile database server DPDS is connected to the user device via a communication network such as the internet, a fixed and/or mobile telecommunication network, a wired or wireless local area network or any combination thereof. The user device UD may be formed by any terminal device, such as a computer, a notebook, a tablet computer, a smartphone, etc. The user device comprises a user interface for interaction with the user, enabling to present information to the user and for the user to enter data and/or instructions. The user interface be formed by a touchscreen, an alphanumeric keyboard, a mouse, a display in combination with suitable software. The user device may be a mobile or stationary device. In order to communicate with the delivery profile database server, the user device may be provided with a browser, or any other communication software, such as a client software, e.g. in case of a smartphone implemented in a form of a so called "app" (i.e. a software application configured for a specific task, in this case configured for user interaction via the user interface of the user device and for communication by the user with the DPDS. Figure 1 further depicts a sender SE. The sender SE may for example comprise a sender computer device, such as a server. The sender SE may comprise an online shopping server, a logistic distribution facility for producing postal packages and/or letters, etc. The method and DPDS according to the invention may also be used by an individual. For example: an individual person that intends to send a letter or package to another person, requests delivery profile data from the DPDS in order to have up to data address information, or a person that moves informs other persons about his/her move by sending them a link to his/her delivery profile. Exemplary embodiments of the sender may comprise an online shopping server, a mail generation facility, a logistics facility, a private person using a user device, etc. For authorisation, a user may provide his/her user identity to a sender (the user identity for example being formed by a telephone number, e-mail address or name of the user for convenience) and the sender requests the DPDS to provide (part of) the delivery profile data. The DPDS sends an request for authorisation to the user device UD of the user, and provides the at least part of the delivery profile data to the sender upon receipt of authorisation.

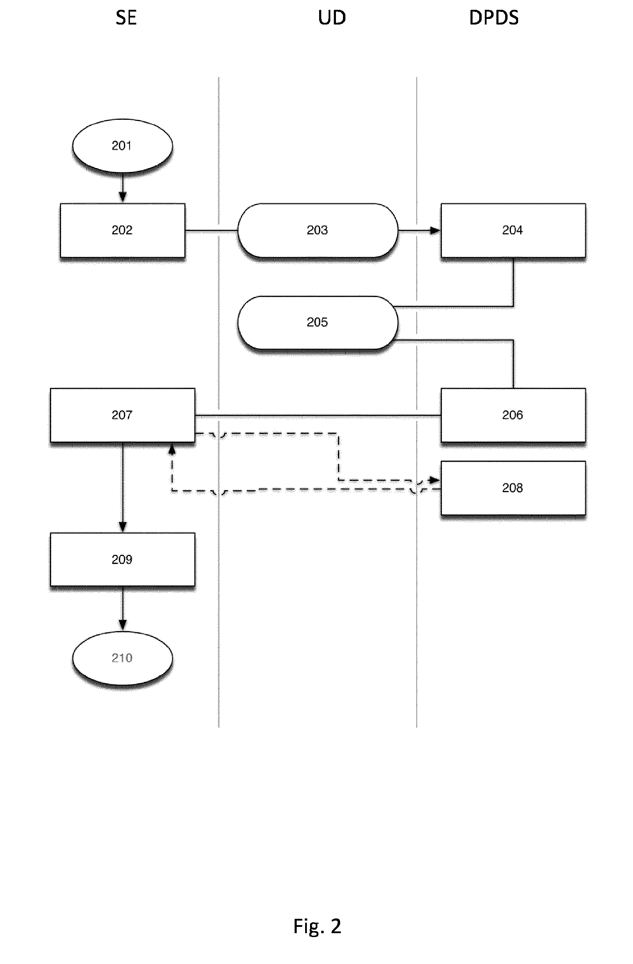

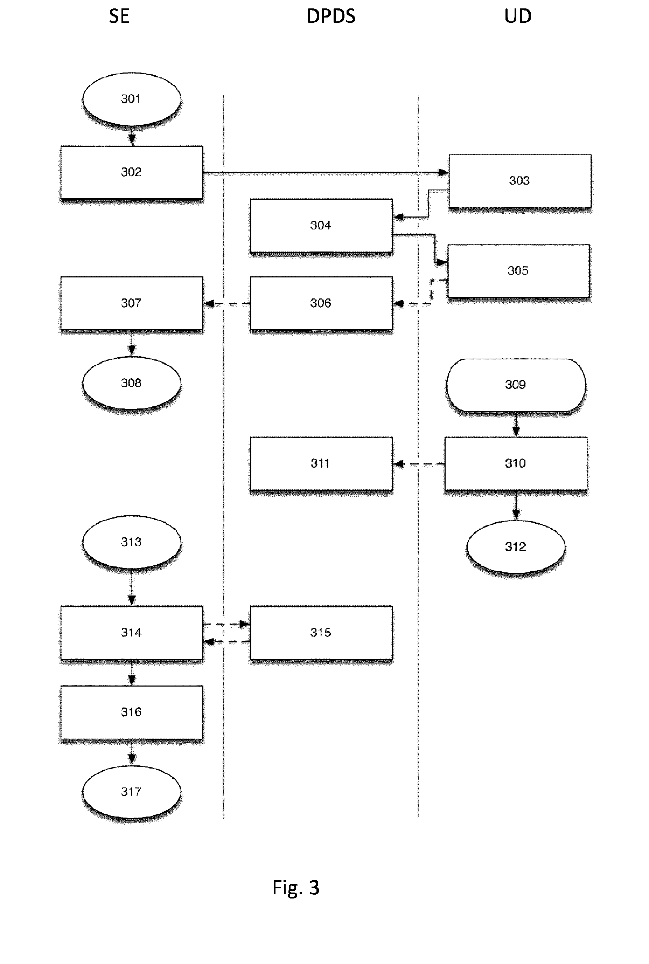

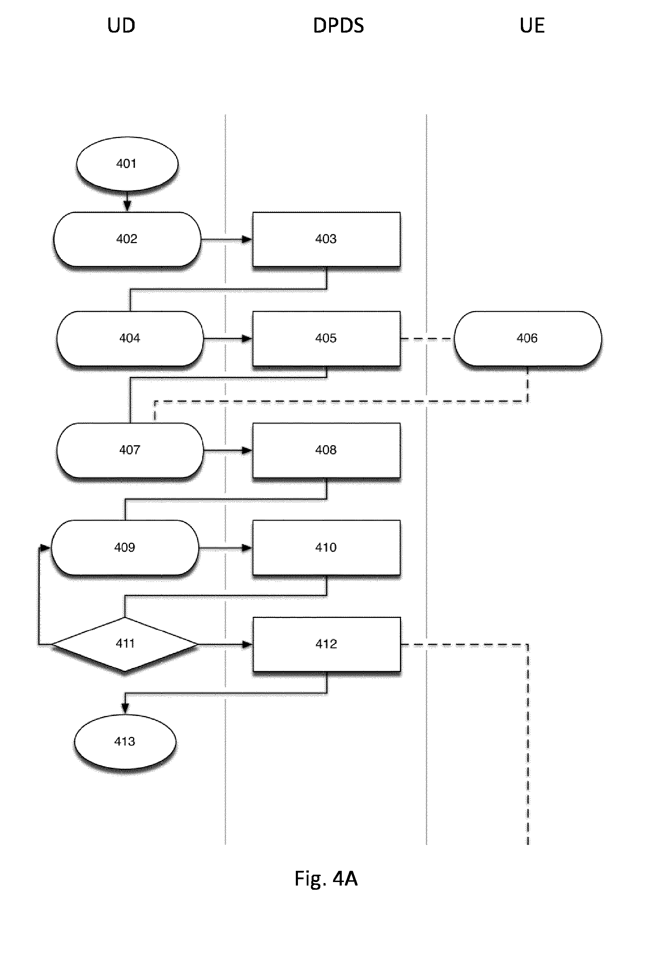

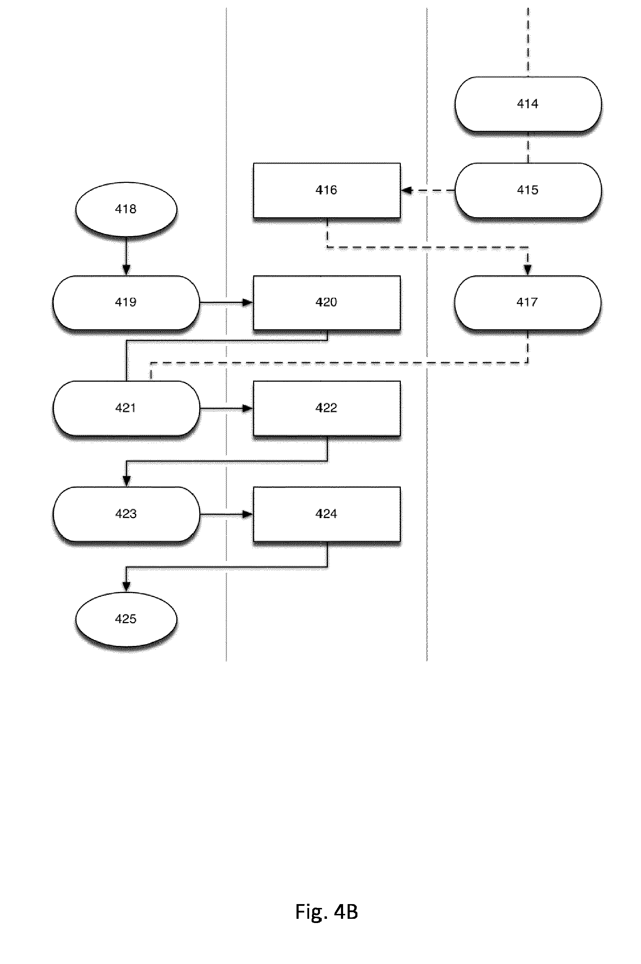

An operation of the delivery profile data base server in accordance with the invention will be explained based on exemplary situations, comprising an ordering process at a webshop, a flow diagram of which being depicted in figure 2, an automated address updating process a flow diagram of which being depicted in figure 3, and a user registration and validation, a flow diagram of which being depicted in figure 4. In the flow diagrams, 3 columns are depicted, whereby in figure 2 the leftmost column represents actions related to the sender, the center column represents actions related to the user, and the rightmost column represents actions related to the delivery profile database server. The actions may include the displaying of information, entering a command or data, sending data, receiving data, etc.

In figure 2, a process starts at 201 from a starting situation where the user has selected an article for purchasing at a webshop (i.e. an online shop), then at 202, the webshop depicts - at the user device, by sending corresponding data to the user device - a link (such as a logo or other weblink) to the user which link is selectable by the user. When the user selects (e.g. clicks on) the link at 203, the webshop communicates with the DPDS and a pop-up is depicted at 204 at the user device that enables the user to select yes (allow) or no (deny) in order to authorize (or not) the webshop to make use of the delivery profile as entered previously by the user. Use may be made of an open DPDS web session (remembered via a cookie). If the user has not logged in, he can do so, for example by entering his user identity DPUI and password, after which 'Allow' & 'Deny' is depicted. If the user selects yes (allow) at 205, then data is sent from the user device to the DPDS whereby the DPDS at 206 registers the confirmation by the user, redirects the user back to the webshop, and sends an authorisation key to the webshop. At 207, the webshop receives the authorisation key, retrieves user data and redirects the user to a checkout. The user data may be obtained by the webshop by direct communication with the DPDS, whereby at 208 the DPDS returns user preference data from the delivery profile in response to receiving the authorisation key from the webshop. Then, at 209, the webshop displays the delivery data on a checkout page, and allows the user to confirm checkout, after which the depicted process stops at 210. As a next step (not depicted in Figure 2, the item ordered by the user may be packaged, provided with data selected from the delivery profile (the sender may select a most appropriate address, for example in accordance with the time/day of the scheduled delivery), and delivered to the user accordingly.

Figure 3 depicts a process involving an update of the delivery address by the user. In figure 3 the leftmost column represents actions related to the sender, the center column represents actions related to the delivery profile database server, and the rightmost column represents actions related to the user. At 301, the process starts, while at 302, the sender requests the delivery profile data at its disposal by mailing to the user a link to the DPDS with an access request. A temporary or permanent identification code of the sender and a code for the type of access as requested by the sender may be comprised in the link that is emailed to the user. The user via the user device accesses the DPDS, the user device requesting information from the DPDS at 303, which is sent by the DPDS to the user device at 304, in order for the user device to display to the user at 305 which sender requests access and what type of access is requested, and the user enters an approval which is sent by the user device to the DPDS. Then, at 306, the DPDS notifies the sender that the access is approved. At step 307, the completion of the approval may be registered by the sender and a corresponding approval code as sent by the DPDS to the sender SE may be stored by the sender for future use. The notification to the sender may be performed by sending the sender the user identification of the DPDS, or by sending to the sender an authorisation key. The process stops at 308.

When a user changes his address, for example because of the user moving to another address at 309, the user changes (by accessing the DPDS via the user device) his default post address at 310, whereby the DPDS stores the updated delivery profile data at 311, after which the process ends at 312 . Starting from 313, when the sender wants to send an items to the user, the sender checks at 314 a validity of the address that the sender has available (being the old address before the moving), and checks at the DPDS using the authorisation key. At 315, the DPDS returns the updated delivery address to the sender, after which the sender updates its records at 316 and sends the item using the updated address, after which the process ends at 317.

Figure 4A and 4B in conjunction depicts a registration process whereby the user registers him self at the DPDS and creates a delivery profile. In figure 4, the leftmost column represents actions related to the user, the center column represents actions related to the delivery profile database server DPDS, and the rightmost column represents actions related to a user environment UE (comprising e.g. a user e-mailbox, a user postal mailbox, etc.

Starting the process at 401, the user visits a website or other user interface of the DPDS at 402 to create a user account. The DPDS depicts at 403 data fields, such as for name, e-mail, etc. At 404, the user enters the requested information at the user device. Then, at 405, the DPDS sends an email comprising a first validation code to the entered email address. A validation input field is depicted to the user. At 406, the user reads the first validation code from the received e-mail and enters the first validation code at 407. At 408, the DPDS validates the code (if identical to the code as emailed to the user) depicts to the user at the user device fields for entering telephone number and address data such as a postal code. At 409, the user enters the telephone number and address data, after which the DPDS checks at 410 the postal code in a postal code database and asks the user to confirm the postal address as obtained from the database. If the user enters at 411 that the data is correct the process continues with 412, otherwise the process repeats 409. At 412, the registration data (address, telephone number) is stored by the DPDS and a postcard with a second validation code or letter is sent to the postal address after which the registration process (temporarily) stops at 413. When the user has received the postal card at 414, he is instructed to send - e.g. by sending a message - from the telephone number as entered by the user in the DPDS, the second validation code to a telephone number stated on the postcard or letter, after which the DPDS validates at 416 the address and telephone number by comparing the received code with the sent second validation code and comparing the telephone number as entered by the user with the telephone number from which the message is received. A temporary pass word is now mailed to the user at 417. The registration process resumes at 418 by the user accessing a login facility of the DPDS at 419 and being provided with a login screen at 420. The user enters the login data at 421 (using the temporary password received at 417), and when logged in, the user is asked at 422 to supply default delivery data about a default delivery address. Which is entered by the user at 423. At 424, the DPDS stored the entered default delivery address and depicts an overview to the user. The user may be provided with the options (not depicted in figure 4) to enter further data, such as an alternative delivery address, or other preferences such as related to direct mail, free newspapers, brochures, etc.. The process ends at 425.

If the sender wishes to use one or more third parties to deliver the item, the sender can generate a Package Code to attach to the item. A third party delivery/transport company (from here on called transporter) may register itself on the DPDS, and can use the package code to access the user preferences linked to the user of the package code, and use this to effect and optimize the delivery. Each query of the package codes may be registered and visible to both the user and sender, by time and transporter identity.

The user may confirm receiving the item, by submitting the package code to the DPDS, which can be done by copying the code to a webpage interface, or using a mobile device camera to automatically read the code. Access to the delivery preferences via a package code may be revoked when either the user confirms delivery, the sender revokes the package code, the sender access period expires or the transporter is no longer authenticated.

## Claims

1. A method of delivery of an item, comprising:
- receiving by a delivery profile database server, DPDS, delivery profile input data from a user device;
- generating delivery profile data, DPD, and a delivery profile user identity, DPUI, associated with the delivery profile data, in response the received delivery profile input data;
- sending by the DPDS an authorization request to the user to request the user to authorize a sender to obtain access to at least part of the delivery profile data;
in response to receiving by the DPDS an authorization response from the user device:
- sending by the DPDS the at least part of the DPD to the sender,
- providing by the sender an affixing of a delivery address data to the item based on the at least part of the DPD received from the DPDs; and
- delivering the item in accordance with the affixed delivery address data.

2. The method according to claim 1, wherein in response to receiving the authorization response, the DPDS sends an authorization key to the sender, the sending of the at least part of the DPD by the DPDS to the sender being performed in response to receiving, by the DPDS, of the authorization key.

3. The method according to claim 2, wherein the authorization key comprises the DPUI.

4. The method according to any of the preceding claims, wherein the sender is associated with an online shopping server, the sending by the DPDS of the authorization request being initiated by the online shopping server in response to the user entering via the user device an order for the item at the online shopping server.

5. The method according to claim 4, comprising associating by the online shopping server an online shopping server user identity to the delivery profile database user identity or the authorization key.

6. The method according to any of the preceding claims, wherein the delivery profile data comprises delivery address data and time information data associated with the delivery address.

7. The method according to claim 6, wherein the time information comprises at least one of a weekday and a time of the day time period.

8. The method according to any of the preceding claims, wherein the delivery profile data comprises at least one of logistic delivery channel settings, addressed commercial mail delivery settings, unaddressed commercial mail delivery settings, newspaper delivery settings, free newspaper delivery settings and vacation delivery settings.

9. The method according to any of the preceding claims, wherein the delivery profile database server comprises association data to associate the delivery profile data associated with the delivery profile user identity with at least one sender from a group of third parties, the method comprising:
comparing by the delivery profile database server if the sender from which the delivery address data request message has been received, is associated with at least one of the delivery profile data and the delivery profile user identity, and
only sending the delivery address data to the sender if the sender is associated with at least one of the delivery profile data and the delivery profile user identity.

10. The method according to any of the preceding claims, wherein the generating the DPD comprises :
- requesting the user to enter an e-mail address, a postal mail address and a telephone number;
- sending a respective activation code to the postal mail address and a respective activation code to the e-mail address as entered by the user ;
- prompting the user to return the activation codes, whereby at least one of activation codes is to be returned via the telephone number
- comparing the returned activation codes with the sent activation codes
- comparing the telephone number from which the respective activation code has been returned with the telephone number as entered by the user, and
- activating a user delivery profile in response to a matching of the returned activation codes with the sent activation codes and a matching of the telephone number from which the respective activation code has been returned with the telephone number as entered by the user.

11. A method of delivery of an item, comprising:
- receiving by a delivery profile database server, DPDS, delivery profile input data from a user device
- generating delivery profile data, DPD, and a delivery profile user identity, DPUI, associated with the delivery profile data, in response the received delivery profile input data;
- sending by the DPDS an authorization request to the user device to request the user to authorize a sender to obtain access to at least part of the delivery profile data;
in response to receiving by the DPDS an authorization response:
- sending by the DPDS the at least part of the DPD to the sender, thereby enabling the sender to affix a delivery address data to the item based on the at least part of the DPD received from the DPDs; and to deliver the item in accordance with the affixed delivery address data.

12. A method of delivery of an item, comprising:
- sending from a user device delivery profile input data to a delivery profile database server, DPDS, to enable the DPDS to generating delivery profile data, DPD, and a delivery profile user identity, DPUI, associated with the delivery profile data, in response the received delivery profile input data;
- receiving by the user device from the DPDS an authorization request to request the user to authorize a sender to obtain access to at least part of the delivery profile data;
- sending from the user device to the DPDS an authorization response in order to enable the DPDS to send the at least part of the DPD to the sender to enable the sender to affix a delivery address data to the item based on the at least part of the DPD received from the DPDS; and to deliver the item in accordance with the affixed delivery address data.

13. A software program comprising program instructions to, when loaded into a memory of a data processing device, provide the data processing device to perform the method according to any of the preceding claims.

14. A delivery profile database server configured to perform the method according to any of claims 1 - 13.
